# FASCICULE DE BREVET EUROPEEN

(11) **EP 3 898 225 B1**
(45) Date de publication et mention de la délivrance du brevet: **01.02.2023**
(21) Numéro de dépôt: 19839398.5
(22) Date de dépôt: 12.12.2019
(51) Int. Cl.: B32B 5/02, B32B 5/08, B32B 27/12, B32B 27/30

(54) **MATÉRIAU SOUPLE TRANSPARENT MUNI DE FILS DE RENFORT**
FLEXIBLES TRANSPARENTES MATERIAL MIT VERSTÄRKUNGSFÄDEN
FLEXIBLE TRANSPARENT MATERIAL WITH REINFORCEMENT THREADS

(30) Priorité: 19.12.2018 FR 1873394
(43) Date de publication de la demande: 27.10.2021
(73) Titulaire: Serge Ferrari SAS, 38110 Saint Jean de Soudain (FR)
(72) Inventeur: GAZAIX, Guillaume, 38490 Saint-André-le-Gaz (FR); ROJON, Jonathan, 8192 Glattfelden (CH)
(74) Mandataire: Cabinet Laurent & Charras
(86) Numéro de dépôt international: PCT/FR2019/053041
(87) Numéro de publication internationale: WO 2020/128247

(56) Documents cités:
- US-A- 4 013 812
- US-A- 4 452 848

## Description

### DOMAINE TECHNIQUE DE L'INVENTION

La présente invention concerne un matériau composite permettant de laisser passer la lumière. En particulier, la présente invention concerne le domaine des matériaux souples de construction, en ce qu'elle peut, par exemple, être utilisée pour former un élément de toiture ou de façade, ou réaliser un abri éphémère.

Pour des raisons mécaniques et esthétiques, de tels matériaux souples sont préférentiellement tendus. Plus précisément, la présente invention présente un intérêt particulier dans la réalisation d'éléments de toiture ou de façade laissant passer la lumière naturelle.

### ARRIERE PLAN TECHNOLOGIQUE

Dans le contexte de l'invention, le terme « toiture » désigne ce qui compose les toits d'un bâtiment, comme par exemple d'une maison, d'un hangar, d'un stade, ou bien encore toute surface d'un objet ayant pour but d'isoler un espace intérieur des précipitations, comme par exemple une toile de tente, un revêtement de serre, ou encore une capote de véhicule automobile.

Afin de former une toiture, l'emploi de matériaux souples est bien connu de l'art antérieur. En effet, par rapport à une toiture composée de tuiles rigides, ces matériaux souples permettent d'obtenir une toiture esthétiquement épurée tout en réalisant l'étanchéité vis-à-vis des précipitations comme la pluie.

De façon générale, il est connu d'avoir un tel matériau souple présentant des caractéristiques de transparence, permettant de laisser pénétrer la lumière naturelle au sein de l'espace protégé par la toiture.

Par exemple, la demande de brevet américain US 4 013 812 décrit une membrane pour la réalisation de toitures, composée d'une grille de fibres de verre enrobées d'un matériau plastique et d'un film de matière plastique transparente.

D'une manière similaire, la demande de brevet américain US 3 623 937 décrit un matériau composite composé d'un film de matière plastique transparente associée à un réseau tissé de fibres de verre, enrobées de polychlorure de vinyle.

Ces matériaux, quoique transparents, comprennent des fibres de verre dans leur structure, ce qui impose des contraintes spécifiques de manutention, de pose et d'utilisation.

En effet, les fibres de verre présentent une faible résistance au pliage, du fait des caractéristiques mécaniques propres au verre. Pour conserver son intégrité et ses performances mécaniques, les cas d'utilisation d'un tel matériau sont donc limitées à des structures planes définitives, ou présentant une très faible courbure. Cela écarte donc naturellement les applications dans lesquelles le matériau nécessite de subir des contraintes mécaniques répétées, voire cycliques, par exemple en passant d'une position pliée à une position dépliée, ou encore d'une position enroulée à une position déroulée. Et cela impose également des contraintes liées au transport de ces matériaux entre le lieu de production et le site d'installation, contraintes d'autant plus fortes que les dimensions des structures sont grandes.

US 4 452 848 divulgue une membrane de toit souple, translucide ou transparente comportant dans l'ordre suivant : une couche interne de renfort comportant un composite fibreux Tedlar/polyester; une couche intermédiaire d'isolation translucide et une couche externe translucide et imperméable aux liquides.

### EXPOSE DE L'INVENTION

Le problème technique que vise à résoudre l'invention est donc de proposer un matériau souple transparent, muni de fils de renfort mécanique, présentant des caractéristiques mécaniques le rendant apte à être utilisé dans des applications dans lesquelles il sera soumis à des contraintes mécaniques de pliage, ponctuelles ou multiples, voire cycliques.

La présente invention se propose donc de résoudre ce problème technique par une feuille souple composite, translucide ou transparente, comportant au moins une couche renfort comportant des fils haute ténacité et un film polymérique translucide ou transparent à la lumière visible, solidaire de ladite couche renfort, ladite feuille souple présentant une diminution de sa résistance à la rupture sous traction inférieure à 10% après avoir été soumise à un test de pliage selon la norme ASTM D4851.

Plus précisément, cette feuille souple est caractérisée en ce que la couche renfort est un textile présentant un taux de transmission lumineuse supérieur à 10% préférentiellement à 30%, voire 40% et très préférentiellement 45%, et comportant des fils haute ténacité à base de polyester aromatique bloc présentant un module de Young supérieur à 50 GPa, lesdits fils présentant une gaine de matériau bloquant les rayons ultraviolets.

Par « bloquant les rayons ultraviolets », on entend que le taux de transmission de la gaine vis-à-vis des rayons ultraviolets est inférieur à 50%.

Avantageusement, ledit textile peut être une grille ou un tissé.

Avantageusement, la membrane est imperméable à l'eau liquide, grâce à l'emploi d'un film continu. Ainsi, le matériau souple objet de l'invention peut être utilisé dans la réalisation de toitures, ou de manière générale pour réaliser des structures étanches.

La gaine protégeant les fils de renfort des rayons ultraviolets peut être réalisée de diverses manières. Ainsi, selon un premier mode de réalisation de l'invention, la gaine enrobe le fil de haute ténacité de façon continue. Cette gaine est formée par une matière enduite sur le fil de renfort. Autrement dit, la matière enduite forme une gaine continue qui recouvre intégralement le fil de renfort. Cette gaine peut être réalisée par une extrusion sur le fil de renfort, après éventuellement une imprégnation destinée à accroitre l'accroche de la matière de la gaine sur le fil. Il est également possible de déposer la matière de la gaine sur le fil par imprégnation, notamment par des passes multiples.

Dans une forme particulière de réalisation, la gaine peut comporter plusieurs couches superposées, obtenues par exemple par des extrusions successives, ou encore par co-extrusion. La couche intérieure, au contact du fil de renfort, assure la protection de ce dernier, et inclut par exemple les charges de blocage du rayonnement ultraviolet. La couche externe peut incorporer des pigments permettant de masquer la couche intérieure de la gaine, notamment lorsque celle-ci est de couleur noire, ou sombre. Cette couche externe de la gaine présente une compatibilité avec le film translucide ou transparent sur lequel est solidarisée la nappe de fils de renfort. On peut notamment prévoir que la couche extérieure présente un point de ramollissement plus faible que celui de la couche intérieure, afin conserver à cette dernière une cohérence pendant les opérations d'assemblage de la nappe et du film, qui nécessite un ramollissement de la couche extérieure la gaine. Bien entendu, l'invention couvre également des solutions dans lesquelles la gaine est constituée de plus de deux couches distinctes.

Dans un autre mode de réalisation, il est possible que le film transparent ou translucide comporte plusieurs couches superposées, et notamment une couche venant au contact de la nappe de fils qui présente une température de ramollissement inférieure à celle de la ou des autres couches. De la sorte, lorsque le film est chauffé lors de son assemblage avec la nappe de fils, seule une partie de l'épaisseur du film est ramollie, et le reste du film ne se déforme pas ou très peu pendant l'assemblage.

Dans un cas particulier, on peut combiner l'emploi d'un fil présentant une gaine multicouche, et un film multicouche également, dont les couches respectives en regard sont en des matériaux qui se ramollissent pendant l'assemblage de la nappe de fils et le film, alors que les autres couches ne se ramollissent pas et conservent leur propriétés dimensionnelles initiales.

D'autres techniques peuvent être envisagées pour recouvrir le fil de renfort d'une gaine le protégeant de la lumière extérieure. Ainsi, selon un second mode de réalisation de l'invention, ladite gaine est composée d'un élément longiligne (fil ou ruban) recouvrant le fil de renfort en y formant une hélice déposée par guipage. Dans un mode plus sophistiqué, la gaine peut être composée de deux guipages, présentant chacun un sens d'enroulement différent de l'autre.

Il est également possible de recouvrir le fil par une opération de tressage.

Avantageusement, le guipage ou le tressage peuvent être réalisés avec un ruban de matériau bloquant en tout ou partie les rayons ultraviolets.

De manière avantageuse, la couche de renfort et le film polymérique sont colaminés ensemble.

Avantageusement, ledit film polymérique est choisi parmi les matériaux suivants : polyfluorure de vinylidène, également connu sous l'acronyme PVDF, ou un polymère à base de tétrafluoroéthylène, hexafluoropropylène, et fluorure de vinylidène, également connu sous l'acronyme THV, l'éthylène propylène fluoré (FEP), le perfluoroalkoxy (PFA) et de manière générale, de nombreux polymères fluorés, ainsi que les acryliques et méthacryliques fluorés, pris seuls ou en mélange.

### BREVE DESCRIPTION DES FIGURES

La manière de réaliser l'invention ainsi que les avantages qui en découlent ressortiront bien de la description des différents modes de réalisation qui suit, donnée à titre indicatif mais non limitatif, à l'appui des figures annexées dans lesquelles :
Figure 1 : une vue en perspective d'une feuille souple consistant en un premier mode de réalisation de l'invention ; et
Figure 2 : une vue en coupe transversale d'une feuille souple selon l'invention, consistant en un deuxième mode de réalisation ; et
Figure 3 : une vue de dessus d'un textile tissé apte à composer le deuxième mode de réalisation de l'invention.

### DESCRIPTION DETAILLEE DE L'INVENTION

L'invention concerne le domaine des matériaux souples composites. Plus spécifiquement, l'invention concerne une feuille souple composite. Cette feuille souple composite se compose, d'une part, d'un film polymérique **1** et, d'autre part, d'une couche de renfort textile **2** solidaire du film polymérique **1.**

Le film polymérique **1,** principalement plan, est avantageusement translucide ou transparent. En effet, son taux de transmission lumineuse est avantageusement supérieur à 80%, et encore plus avantageusement supérieur à 90%. Il se compose d'un matériau polymérique, avantageusement fluoré, tel que le PVDF ou le THV.

Le film polymérique **1** présente une épaisseur comprise entre 50 et 500 µm, avantageusement égale voisine de 200 µm. Il présente une face supérieure **10** configurée pour résister aux intempéries, notamment en étant imperméable à l'eau liquide, et une face inférieure **11.**

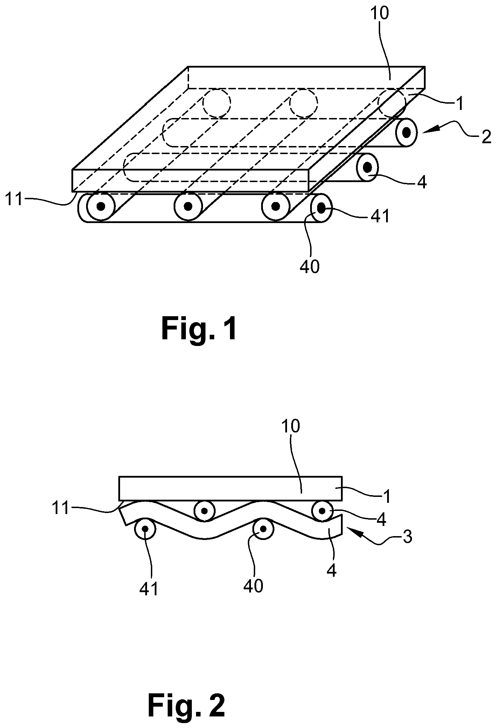

Selon un premier mode de réalisation de l'invention illustré par la figure 1, ladite feuille composite se compose d'un film polymérique **1** solidaire par sa face inférieure **11** d'une grille textile **2.**

Cette grille textile **2** est constituée d'une superposition de deux nappes identiques perpendiculaires l'une par rapport à l'autre, et constituées de fils de renforts **4** parallèles entre eux. Les fils de renfort **4** sont disposés de manière à présenter quelques fils par centimètre dans le plan transversal à chaque nappe. De cette manière, le taux de transmission de la lumière naturelle à travers ladite feuille souple est supérieur à 45%.

Chaque fil de renfort **4** est sensiblement cylindrique, et comprend une âme **41** composée avantageusement d'un fil de Vectran^{®} commercialisé par la société KURARAY titrant entre 400 et 3000 dtex, avantageusement titrant entre 1600 et 1700 dtex, et encore plus avantageusement titrant 1670 dtex. En variante, l'âme peut être réalisée avec un fil de Siveras^{®} commercialisé par la société TORAY.

Dans un exemple de réalisation, la nappe de renfort **2** est réalisée avec les fils de renfort **4** à hauteur de 2,5 fils/cm. Préférentiellement, le module de Young du fil de Vectran^{®} composant l'âme **41** est supérieur à 50 GPa.

Une gaine **40** entoure chaque fil de renfort **4.** Dans un exemple de réalisation, elle est constituée d'un copolymère de polyfluorure de vinylidène (PVDF) coloré en noir par des pigments de noir de carbone. Avantageusement, la gaine **40** enveloppe totalement chaque fil de renfort **4,** de sorte à bloquer, ou à tout le moins fortement limiter la pénétration de tout rayonnement lumineux, et notamment les rayons ultra-violets. D'autre agents anti-UV ou des pigments de couleurs diverses peuvent être utilisés pour assurer l'effet bloquant des rayons UV, et de protéger le fil **4.** Parmi les autres matériaux donnant satisfaction pour cette fonction, on peut citer l'oxyde de zinc, le dioxyde de titane, le benzotriazole ou l'hydroxyphényl triazine.

En effet, le Vectran^{®} est un matériau dont les performances mécaniques et la résistance dans le temps se trouvent dégradées lorsqu'il est exposé aux rayons ultra-violets, provenant par exemple du soleil.

Cette gaine **40** est obtenue, de manière avantageuse, directement par un procédé d'extrusion autour de l'âme **41.** Elle est ainsi solidaire mécaniquement de l'âme **41,** et la recouvre d'une manière uniforme sur toute sa circonférence. Une imprégnation préalable du fil d'âme, par exemple à base de polyuréthanne ou encore une émulsion de PVDF, peut être utile pour assurer une bonne tenue de la matière de la gaine sur le fil d'âme.

La gaine **40** peut aussi être formée d'au moins un guipage d'un ruban composé de PVDF ou analogue, préférentiellement coloré en noir à l'aide de pigments de noir de carbone, enroulé en hélice autour de la gaine **40.** Ce guipage recouvre l'ensemble de la surface de l'âme **41.** Finalement, le diamètre total de chaque fil de renfort **4** est compris entre 0,8 et 1 mm, et est avantageusement voisin de 0,9 mm. Chaque fil de renfort **4** présente un titre compris entre 9500 et 10 000 dtex, avantageusement voisin de 9900 dtex. Les fils de renfort **4,** lorsqu'ils sont mis en tension, permettent de tendre ladite feuille composite, et ainsi de réaliser des toitures imperméables à l'eau liquide et à toute autre forme de précipitations.

La grille textile **2** est solidaire dudit film polymérique **1** par l'intermédiaire de la gaine **40.** En effet, celle-ci est localement fusionnée avec la face inférieure **11** du film polymérique **10.** La grille textile **2** est donc mécaniquement liée au film polymérique **1,** ce qui permet avantageusement de renforcer la tenue mécanique de la feuille composite.

Selon un second mode de réalisation de l'invention, illustré par la figure 2, la couche de renfort textile prend avantageusement la forme d'un textile tissé **3** composé de fils haute ténacité **4** identiques à ceux présents dans le premier mode de réalisation de l'invention.

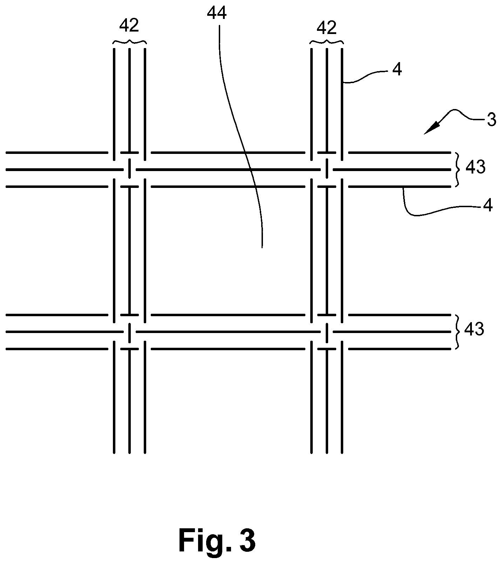

Ce textile tissé **3** peut être de différentes natures. Par exemple, tel qu'illustré sur la figure 3, les fils haute ténacité **4** forment un tissage ajouré, dans lequel les fils de chaîne et de trame sont groupés par sous-ensembles, formant ainsi des faisceaux de fils de chaîne **42** et des faisceaux de fils de trame **43.** Chacun des faisceaux **42, 43** est composé de trois fils de haute ténacité **4** répartis dans le plan de ladite feuille souple, à raison de 2,5 fils/cm.

De cette manière, le textile tissé **3** présente des zones ajourées **44** formées par les intersections entre les faisceaux de fils de chaîne **42** et les faisceaux de fils de chaîne **43,** permettant avantageusement de laisser passer la lumière naturelle à travers ledit textile tissé **3,** et ainsi de limiter l'impact de la structure textile sur le taux de transmission lumineuse à travers ladite feuille souple.

Dans la forme illustrée à la figure 3, les fils haute ténacité **4** formant les faisceaux de fils de chaîne **42** et les faisceaux de fils de trame **43** s'entrelacent en formant une armure de type toile.

Dans une variante non représentée, il peut être avantageux que les fils haute ténacité contenus dans les faisceaux de fils de chaîne et les faisceaux de fils de trame composent un tissage en pas de gaze. Ce type de tissage limite voire bloque le déplacement des fils haute ténacité au sein des faisceaux de fils, ce qui offre une stabilité du textile tissé et lui confère une résistance accrue aux différentes manipulations, notamment avant assemblage avec le film.

L'emploi de fils de Vectran^{®}, ou plus généralement de polyester aromatique bloc, permet de garantir une tenue mécanique durable à la membrane, lorsque celle-ci est sollicitée par des contraintes d'utilisation, comme par exemple des cycles d'enroulement/déroulement, ou encore de pliage/dépliage.

En effet, ces contraintes d'utilisation induisent une diminution des propriétés mécaniques des fibres. Le Demandeur a constaté que le fils de Vectran^{®} présentent une chute de ses propriétés mécaniques bien moindre que les fils de verre au cours du test de mesure du taux de fibres brisées suite à l'application d'une charge après pliage défini par la norme ASTM D4851, de sorte qu'il est avantageusement utilisé pour réaliser l'âme **41.** De façon résumée, ce test consiste à réaliser une boucle d'une bande de 5 cm de large avec la matière à tester. Cette bande reçoit l'appui d'un rouleau de 90mm de diamètre et 100mm de large de sorte que la boucle est aplatie, de manière répétitive, à concurrence de 10 passages en 10 secondes. La bande est ensuite remise à plat et sa résistance à la rupture est mesurée de de façon classique. Les tests ainsi effectués montre une diminution de la résistance quasi nulle, en tout cas inférieure à 5%, voire 10%, à comparer par exemple avec une diminution de l'ordre de 20% pour un matériau analogue avec des fils de renfort en verre.

Bien entendu, l'invention couvre également les variantes dans lesquelles les fils de renfort sont réalisés à partir d'un matériau présentant une forte résistance aux cycles de pliage, et une forte résistance à la traction. Par ailleurs, d'autres polymères fluorés peuvent être employés, tant pour le film que pour la gaine des fils de renfort, en les choisissant avec une température de ramollissement inférieure à 300°C, voire 320°C, correspondant à la température de dégradation des fils de renforts, qu'il convient de ne pas dépasser lors de l'opération de solidarisation de la nappe de fils et du film.

L'invention présente ainsi l'avantage de fournir une membrane qui présente un très haut taux de transmission lumineuse, du fait de l'emploi de fils de renfort très résistants qui peuvent donc être relativement espacés. Cette bonne transmission lumineuse est combinée avec une excellente résistance au pliage qui permet la réalisation de pièces de grande dimensions qu'il est toutefois aisé de transporter en les pliant, sans modification sensible des propriétés mécaniques et visuelles après dépliage. L'emploi de fils de faible densité (de l'ordre de 1,4) permet de déployer ces membranes tant en position verticale qu'horizontale dans flèche importante. Cette membrane est donc tout à fait adaptée pour la réalisation d'éléments de structure architecturale, en toiture ou façade, voire en structure gonflable autoportante.

## Revendications

1. Feuille souple composite, translucide ou transparente présentant un taux de transmission lumineuse supérieur à 45%, comportant :
- au moins une couche renfort (2, 3) comportant des fils haute ténacité (4) ; et
- un film polymérique (1) fluoré translucide ou transparent à la lumière visible, solidaire de ladite couche de renfort (2, 3) ;
ladite feuille souple étant ***caractérisée en ce que*** la couche renfort (2, 3) est un textile comportant des fils haute ténacité (4) à base de polyester aromatique bloc présentant un module de Young supérieur à 50 GPa, lesdits fils présentant une gaine (40) de matériau bloquant les rayons ultraviolets, ladite feuille souple présentant une diminution de sa résistance à la rupture sous traction inférieure à 10% après avoir été soumise à un test de pliage selon la norme ASTM D4851.

2. Feuille souple selon la revendication 1 ***caractérisée en ce que*** ledit textile est une grille.

3. Feuille souple selon l'une des revendications 1 ou 2 ***caractérisée en ce qu*'**elle est imperméable à l'eau liquide.

4. Feuille souple selon l'une des revendications 1 à 3 ***caractérisée en ce que*** ladite gaine (40) enrobe le fil de haute ténacité d'une matière continue.

5. Feuille souple selon la revendication 4 ***caractérisée en ce que*** ladite gaine est formée d'au moins deux couches superposées.

6. Feuille souple selon l'une des revendications 1 à 3 ***caractérisée en ce que*** ladite gaine est composée d'un guipage.

7. Feuille souple selon la revendication 5 ***caractérisée en ce que*** ladite gaine est composée de deux guipages, présentant chacun un sens d'enroulement différent de l'autre.

8. Feuille souple selon l'une des revendications 5 à 6 ***caractérisée en ce que*** ledit guipage est un ruban de matériau bloquant les rayons ultraviolets.

9. Feuille souple selon l'une des revendications 1 à 7 ***caractérisée en ce que*** ladite au moins une couche de renfort (2, 3) et ledit film polymérique (1) sont colaminés ensemble.

10. Feuille souple selon l'une des revendications 1 à 8 ***caractérisée en ce que*** ledit film polymérique (1) fluoré est choisi parmi les matériaux suivants :
- polyfluorure de vinylidène (PVDF),
- un polymère à base de tértafluoroéthylène, hexafluoropropylène, et fluorure de vinylidène (THV).

## Patentansprüche

1. Eine transluzente oder transparente flexible Verbundfolie mit einem Lichttransmissionsgrad von über 45%, die umfasst:
- mindestens eine Verstärkungsschicht (2, 3), die hochfeste Garne (4) enthält; und
- eine fluorierte, für sichtbares Licht transluzente oder transparente (1) Polymerfolie, die mit dieser Verstärkungsschicht (2, 3) fest verbunden ist;
diese flexible Folie ist ***dadurch gekennzeichnet, dass*** es sich bei der Verstärkungsschicht (2, 3) um ein Textilgewebe handelt, das hochfeste Garne (4) auf Basis eines aromatischen Blockpolyesters mit einem Elastizitätsmodul von mehr als 50 GPa. enthält, diese Garne haben eine Hülle (40) aus Material, das UV-Strahlung blockiert, die erwähnte flexible Folie weist eine Verringerung der Bruchfestigkeit unter Zug von weniger als 10% auf, nachdem sie einem Biegetest nach ASTM D4851 unterzogen wurde.

2. Flexible Folie nach Anspruch 1 ***dadurch gekennzeichnet, dass*** es sich bei diesem Textil um ein Netz handelt.

3. Flexible Folie nach einem der Ansprüche 1 oder 2 ***dadurch gekennzeichnet, dass*** sie wasserundurchlässig ist.

4. Flexible Folie nach einem der Ansprüche 1 bis 3 ***dadurch gekennzeichnet, dass*** die erwähnte Hülle (40) das hochfeste Garn kontinuierlich umhüllt.

5. Flexible Folie nach Anspruch 4 ***dadurch gekennzeichnet, dass*** diese Hülle aus mindestens zwei übereinanderliegenden Schichten besteht.

6. Flexible Folie nach einem der Ansprüche 1 bis 3 ***dadurch gekennzeichnet, dass*** diese Hülle aus einer Umspinnung besteht.

7. Flexible Folie nach Anspruch 5 ***dadurch gekennzeichnet, dass*** die erwähnte Hülle aus zwei Umspinnungen besteht, die jeweils eine voneinander unterschiedliche Wichklungsrichtung aufweisen.

8. Flexible Folie nach einem der Ansprüche 5 bis 6 ***dadurch gekennzeichnet, dass*** es sich bei dieser Umspinnung um ein Material handelt, das UV-Strahlen blockiert.

9. Flexible Folie nach einem der Ansprüche 1 bis 7 ***dadurch gekennzeichnet, dass*** diese mindestens eine Verstärkungsschicht (2, 3) und diese Polymerfolie (1) zusammen plattiert werden.

10. Flexible Folie nach einem der Ansprüche 1 bis 8 ***dadurch gekennzeichnet, dass*** die erwähnte fluorierte Polymerfolie (1) ausgewählt wird aus den folgenden Materialien:
- Polyvinylidenfluorid (PVDF),
- einem Polymer auf Basis von Tertafluorethylen, Hexafluorpropylen, und Polyvinylidenfluorid (THV).

## Claims

1. A composite flexible sheet which is translucent or transparent, having a light transmittance of more than 45%, comprising:
- at least one reinforcing layer (2, 3) comprising high tenacity yarns (4); and
- a fluorinated polymeric film (1) which is translucent or transparent to visible light, which is integral with said reinforcing layer (2, 3);
said flexible sheet being ***characterized in that*** the reinforcing layer (2, 3) is a textile comprising high tenacity yarns (4) based on an aromatic block polyester having a Young's modulus of more than 50 GPa, said yarns having a sheath (40) of material which blocks ultraviolet radiation, said flexible sheet having a reduction in its tensile strength of less than 10% after having undergone a fold test in accordance with the standard ASTM D4851.

2. The flexible sheet as claimed in claim 1 ***characterized in that*** said textile is a grid.

3. The flexible sheet as claimed in claim 1 or claim 2, ***characterized in that*** it is impermeable to liquid water.

4. The flexible sheet as claimed in one of claims 1 to 3, ***characterized in that*** said sheath (40) covers the high tenacity yarn in a continuous manner.

5. The flexible sheet as claimed in claim 4, ***characterized in that*** said sheath is formed from at least two superimposed layers.

6. The flexible sheet as claimed in one of claims 1 to 3, ***characterized in that*** said sheath is composed of a wrap.

7. The flexible sheet as claimed in claim 5, ***characterized in that*** said sheath is composed of two wraps each having a winding direction which is different from the other.

8. The flexible sheet as claimed in claim 5 or claim 6, ***characterized in*** said wrap is a tape of material which blocks ultraviolet radiation.

9. The flexible sheet as claimed in one of claims 1 to 7, ***characterized in that*** said at least one reinforcing layer (2, 3) and said polymeric film (1) are co-laminated together.

10. The flexible sheet as claimed in one of claims 1 to 8, ***characterized in that*** said fluorinated polymeric film (1) is selected from the following materials:
- polyvinylidene fluoride (PVDF),
- a polymer based on tetrafluoroethylene, hexafluoropropylene, and vinylidene fluoride (THV).
